Europäisches Patentamt

European Patent Office

Office européen des brevets

(11) Veröffentlichungsnummer: **0 324 942 B1**

## (12) EUROPÄISCHE PATENTSCHRIFT

(45) Veröffentlichungstag der Patentschrift: **02.12.92**

(21) Anmeldenummer: **88120684.1**

(22) Anmeldetag: **10.12.88**

(51) Int. Cl.⁵: **G11B 5/84**, G11B 5/72

54 Verfahren zur Herstellung eines magnetischen Aufzeichnungsträgers.

(30) Priorität: **17.12.87 DE 3742767**

(43) Veröffentlichungstag der Anmeldung:
**26.07.89 Patentblatt 89/30**

(45) Bekanntmachung des Hinweises auf die
Patenterteilung:
**02.12.92 Patentblatt 92/49**

(84) Benannte Vertragsstaaten:
**DE FR GB NL**

56 Entgegenhaltungen:
**EP-A- 0 182 367**
**DE-A- 273 329**
**DE-A- 3 406 587**

**PATENT ABSTRACTS OF JAPAN, Bd. 9, Nr. 334 (P 417)(2057), 27. Dezember 1985; & JP-A-60 157725**

**PATENT ABSTRACTS OF JAPAN, Bd. 9, Nr, 334 (P-417)(2057), 27. Dezember 1985; & JP-A-60 157726**

(73) Patentinhaber: **BASF Aktiengesellschaft**
**Carl-Bosch-Strasse 38**
**W-6700 Ludwigshafen(DE)**

(72) Erfinder: **Hitzfeld, Michael, Dr.**
**Kalkerdestrasse 20**
**W-6718 Gruenstadt(DE)**
Erfinder: **Frechen, Thomas, Dr.**
**Dammweg 4**
**W-6900 Heidelberg(DE)**
Erfinder: **Heilmann, Peter, Dr.**
**Otto-Schmitt-Gross-Strasse 42**
**W-6702 Bad Duerkheim(DE)**
Erfinder: **Koch, Volker, Dr.**
**Am Hipperling 3**
**W-6719 Battenberg(DE)**
Erfinder: **Doerr, Kurt, Dr.**
**13 a, Boulevard Wilson**
**F-67000 Strasbourg(FR)**
Erfinder: **Hoffmann, Hans-Joachim, Dr.**
**Brombeermatt 10**
**W-7614 Gengenbach(DE)**
Erfinder: **Nowak, Uwe, Dr.**
**Wolfhartstrasse 14**
**W-6700 Ludwigshafen(DE)**

EP 0 324 942 B1

**Beschreibung**

Die Erfindung betrifft ein Verfahren zur Herstellung eines magnetischen Aufzeichnungsträgers im wesentlichen bestehend aus einem unmagnetischen Trägermaterial und einer darauf aufgebrachten magnetischen Metalldünnschicht sowie einer auf der Oberfläche der Metalldünnschicht befindlichen Kohlenstoffschutzschicht.

Die magnetischen Schichten der üblichen Aufzeichnungsträger bestehen aus polymeren organischen Bindemitteln und darin fein verteilten magnetischen Oxid- oder Metallteilchen. In dem Bestreben die Aufzeichnungsdichte der magnetischen Aufzeichnungsträger insbesondere auf dem Gebiet der Video- und Datenaufzeichnung zu erhöhen, war es erforderlich, die Schichtdicken der Aufzeichnungsschicht stetig weiter zu verringern. Derartige dünne Schichten lassen sich jedoch nicht mehr mit Oxid- oder Metallteilchen/ Bindemittelschichten erreichen. Es wurde daher schon vorgeschlagen, dünne ferromagnetische Metallschichten als Aufzeichnungsschichten einzusetzen. Bekannt sind chemisch oder elektrolytisch abgeschiedene ferromagnetische Metall- bzw. Legierungsschichten, insbesondere aus Kobalt und/oder Nickel sowie vor allem aber auf das Trägermaterial aufgedampfte oder aufgesputterte ferromagnetische Schichten der entsprechenden Metalle oder Legierungen, wie u.a. Eisen, Kobalt, Nickel, Chrom, Seltene Erden.

Derartig ausgebildete Aufzeichnungsträger werden jedoch meist im ständigen mechanischen Kontakt mit dem Magnetkopf oder im Falle der sogenannten Magnetplattenlaufwerke mit einem in sehr geringem Abstand über die rotierende Platte fliegenden Magnetkopf verwendet. Dies bedeutet, daß die Oberfläche der Magnetschicht hervorragende Korrosions- und Abriebfestigkeit aufweisen muß. Da jedoch die für die Aufzeichnungsschichten geeigneten ferromagnetischen Metallschichten keine entsprechenden Eigenschaften aufweisen, ist die Ausbildung von Schutzschichten erforderlich. Bei der Auswahl solcher Schutzschichten ist darauf zu achten, daß weder das Aufbringen der Schutzschicht noch die Schutzschicht selbst in irgendeiner Weise die Magnetschicht nachteilig beeinflußt.

Zur Lösung dieser Probleme wurde bereits eine Vielzahl von Vorschlägen gemacht. So beschreibt die US-PS 3 767 369 das Aufbringen einer Rhodiumschutzschicht zur Verbesserung der Härte und der Gleiteigenschaft, wobei zur Verbesserung der zu geringen Haftung des Rhodiums auf der Magnetschicht eine Zinn-Nickel-Zwischenschicht aufgebracht werden muß. Dieses Verfahren erbringt weder die inzwischen geforderten Schutzschichteigenschaften noch ist deren Aufbringen einfach und problemlos zu bewerkstelligen. Für alle jenen Fälle bei denen die metallische Magnetschicht kobalthaltig ist, wurde vorgeschlagen, diese Magnetschicht bei vorgegebener Feuchtigkeit an Luft zu tempern und damit oberflächlich zu oxidieren (US-PS 3 353 166, US-PS 4 029 541). Ein solches Verfahren weist jedoch besondere Nachteile auf. So kann ein Temperprozeß, der zur Fertigung der genannten Schutzschichten nötig ist, sowohl die magnetischen Eigenschaften der Aufzeichnungsschicht selbst als auch an sich übliche Unter- oder Zwischenschichten derart beeinflussen, daß sie ihrerseits wieder die Eigenschaften der Magnetschichten beeinträchtigen.

Auch das Aufbringen von flüssigen Oligomeren, z.B. von Perfluorpolyethern, auf die zu schützende Magnetschicht durch Tauchen oder Aufschleudern ist beispielsweise aus der US-PS 3 778 308 bekannt. Nachteilig an diesem Verfahren ist jedoch, daß das Schmiermittel z.B. unter dem Einfluß der Zentrifugalkraft und der Luftströmung beim Betrieb der Aufzeichnungsplatten zunehmend von innen nach außen wandert, so daß unter Abnahme der Schmierfähigkeit der Verschleiß und die Reibung sich gegenseitig beeinflussend lawinenartig anwachsen.

Nach anderen Verfahren werden unterschiedliche Schutzschichten im Vakuum, meist durch Sputtern, aufgebracht, so gemäß der US-PS 4 277 540 Schichten aus Gold, Tantal, Niob, Platin, Chrom, Wolfram und Rhodium sowie die Nitride oder Carbide des Siliciums, Zirkons, Hafniums und Titans und gemäß der US-PS 4 268 369 Schichten aus Siliciumdioxid. Des weiteren werden in der DD-PS 109 101 für Magnetspeicher mit metallischer Dünnschicht Schutzschichten aus im Vakuum aufgewachsenen Kohlenstoffschichten beschrieben. Solche Kohlenstoffschutzschichten sind allerdings wegen eines ungenügenden Korrosionsschutzes wenig für die rein metallischen Magnetschichten geeignet. Auch die Herstellung einer Deckschicht aus einem Kohlenstoff und Wasserstoff enthaltenden plasmapolymerisierten Film ist bekannt (DE-A-35 45 794). Desweiteren wird in der JP-A 60 157 725 gemäß dem Oberbegriff von Anspruch 1 vorgeschlagen, eine Kohlenwasserstoffschutzschicht auf einer ferromagnetischen Metalldünnschicht durch Plasmazersetzung und Polymerisation eines gasförmigen gesättigten Kohlenwasserstoffes oder durch RF-Sputtern eines Kohlenstofftargets in einer einen gasförmigen Kohlenwasserstoff enthaltenden Atmosphäre herzustellen. Jedoch ist eine insbesondere großtechnische Realisierung wegen der Bereitstellung der erforderlichen extrem hohen RF-Leistung problematisch und wenig wirtschaftlich.

Diese Schutzschichten bringen zwar für die jeweils vorgesehene Problemstellung eine Verbesserung, sie können jedoch nicht hinsichtlich der wirtschaftlichen Durchführung oder aber in allen Eigenschaften, wie vor allem in der Abrieb-, Gleit- und Dauerstandsfestigkeit sowie hinsichtlich der Korrosion befriedigen und dabei gleichzeitig die Aufzeichnungseigenschaften der Magnetschicht nicht nachteilig beeinflussen.

Aufgabe der Erfindung war es daher, ein Verfahren zur Herstellung eines magnetischen Aufzeichnungsträgers der genannten Art bereitzustellen, bei dem die auf der ferromagnetischen Metalldünnschicht erzeugte Kohlenstoffschutzschicht die vorgenannten Nachteile nicht aufweist und sich insbesondere durch gute Verschleiß- und Korrosionsfestigkeit auszeichnet.

Es wurde nun gefunden, daß sich bei einem Verfahren zur Herstellung eines magnetischen Aufzeichnungsträgers, im wesentlichen bestehend aus einem unmagnetischen Trägermaterial und einer darauf aufgebrachten ferromagnetischen Metalldünnschicht, sowie einer auf der Oberfläche der Metalldünnschicht befindlichen Wasserstoff enthaltenden, amorphen Kohlenstoffschutzschicht, welche in einer Vakuumkammer mittels eines Sputterprozesses ausgehend von einem Kohlenstoff-Target unter gleichzeitiger Zugabe eines im Sputterplasma zersetzlichen Kohlenwasserstoffgases zum Sputtergas auf der Oberfläche der Metalldünnschicht in einer Dicke von 5 bis 100 nm erzeugt wird, die Aufgabe lösen läßt, wenn die Wasserstoff enthaltende, amorphe Kohlenstoffschicht mittels eines DC-Magnetron-Sputterprozesses mit einem Kohlenstoff-Target und unter Zugabe eines Kohlenwasserstoffgases zum Sputtergas erzeugt wird.

In besonders vorteilhafter Weise wird bei dem erfindungsgemäßen Verfahren das Kohlenwasserstoffgas in einer solchen Konzentration dem Sputtergas zudosiert, daß sich die Sputterleistung während der Prozeßdauer nicht ändert. Das bewirkt, daß eine Belegung des elekrisch leitenden Graphittargets mit einer isolierenden Schicht aus plasmapolymerisiertem Kohlenstoff am Target durch ein Gleichgewicht von abgeschiedenem plasmapolymerisierten Kohlenstoff und dem von Argonatomen abgesputterten plasmapolymersierten Kohlenstoff verhindert wird. Als Kohlenwasserstoffgas wird vorzugsweise Acetylen eingesetzt.

Die nach dem erfindungsgemäßen Verfahren erhaltene Kohlenstoffschutzschicht besteht aus amorphem Kohlenstoff und weist einen Wasserstoffgehalt von bis zu 20 Atom%, vorzugsweise zwischen 5 und 12 Atom% auf. Der Kontaktwinkel, den ein Tropfen aus destilliertem Wasser mit der Kohlenstoffoberfläche bildet, erhöht sich von 55° für eine nur durch Sputtern hergestellte Kohlenstoffschicht auf über 70° für eine nach dem erfindungsgemäßen Verfahren hergestellte Kohlenstoffschicht. Ebenfalls ändert sich der Brechungsindex der Schicht.

Zur Durchführung des erfindungsgemäßen Verfahrens wird der im wesentlichen aus Trägermaterial und ferromagnetischer Metalldünnschicht bestehende Aufzeichnungsträger in eine Vakuumkammer gebracht. Nach dem Evakuieren des Rezepienten auf ein Basisvolumen von kleiner $10^{-6}$ Torr wird Argon als Sputtergas eingelassen und ein Plasma unter dem graphitischen Kohlenstofftarget gezündet. Nachdem das DC-Plasma stabil brennt wird der Argongaszuführung Acetylen in einem Partialdruckverhältnis von 0,01 : 1 bis 1 : 1 dem Sputtergas Argon zugemischt. In einem Ausführungsbeispiel werden $5 \cdot 10^{-3}$ Torr Argon und $1 \cdot 10^{-3}$ Torr Acetylen eingesetzt. In diesem DC-Plasma, in dem ionisierte Argonatome Kohlenstoffatome am Target absputtern und in dem das Acetylengas zersetzt wird und der dabei entstehende Kohlenstoff sich ebenfalls abscheidet, werden die magnetischen Aufzeichnungsträger mit dem gebildeten Kohlenstoff beschichtet.

Neben der verbesserten Wirkung der so abgeschiedenen Kohlenstoffschicht bezüglich Korrosionsschutz und verbesserten mechanischen Eigenschaften des magnetischen Aufzeichnungsträgers ergibt dieses Verfahren auch technische Vorteile bei der Beschichtung dieser Aufzeichnungsträger. Durch das erfindungsgemäße Verfahren besteht die Möglichkeit ein Gleichgewicht am Target einzustellen, so daß sich die Sputterleistung während der Prozeßdauer nicht ändert. Dies hat außerdem zur Folge, daß sich das Verfahren mit preiswerten leistungsstarken DC-Strom- oder -Spannungsversorgungen durchführen läßt.

Ein wesentlicher Nachteil bei DC-Magnetron-Sputterprozessen nach dem Stand der Technik sind die sehr geringen Kohlenstoff-Sputterraten, wodurch die Kapazität entsprechender Beschichtungsanlagen zur Herstellung der Schutzschichten auf Aufzeichnungsträgern beschränkt wird. Im Gegensatz dazu lassen sich nach dem erfindungsgemäßen Verfahren die Abscheidungsraten bis zu einem Faktor 10 erhöhen.

Ein weiterer Vorteil des erfindungsgemäßen Verfahrens besteht auch darin, daß sich dieses Verfahren ohne besondere oder aufwendige Änderungen mit den bereits bestehenden Beschichtungsanlagen durchführen läßt.

Die magnetischen Aufzeichnungsträger mit ferromagnetischer Metalldünnschicht und ihr Aufbau aus unmagnetischem Trägermaterial, gegebenenfalls unmagnetischer Zwischenschicht und ferromagnetischer Metalldünnschicht sind bekannt. Als Trägermaterial sind sowohl starre als auch flexible Materialien üblich. Vorwiegend werden Scheiben aus Aluminium oder deren Legierungen sowie Scheiben oder Folienbahnen aus Polyethylenterephthalat oder Polyimid eingesetzt.

Zur Ausbildung geeigneter Magnetschichten werden die Trägermaterialien mit einer unmagnetischen Unterschicht versehen. Bekannt sind bei plattenförmigen Aluminium-Trägermaterialien chemisch bzw. autokatalytisch abgeschiedene amorphe Nickel-Phosphor-Legierungsschichten mit einem Phosphoranteil von 7 bis 11 Gew.%. Die Schichtstärken betragen üblicherweise 5 bis 50, insbesondere 10 bis 30 $\mu$m. Die so aufgebrachten unmagnetischen Unterschichten bewirken im Falle der Aluminiumträgermaterialien eine Verbesserung in der Bearbeitbarkeit der Oberfläche verglichen mit dem unbeschichteten Aluminiumträger.

Als ferromagnetische Metalldünnschichten kommen die üblichen mit Schichtstärken von etwa 300 bis 1500 Å in Frage, die in an sich bekannter Weise durch chemische Abscheidung, galvanische Abscheidung oder durch Aufdampfen bzw. Aufsputtern, d.h. Abscheidung der Metalle oder Metalleigerungen im Hochvakuum auf die Träger abgeschieden werden. Als geeignete magnetische Materilaien sind Eisen, Nickel, Kobalt oder deren Legierungen untereinander oder mit geringen Anteilen anderer Elemente zu nennen. Geeignete kobalthaltige ferromagnetische Metalldünnschichten sind u.a. Kobalt-Phosphor-, Kobalt-Bor- sowie Kobalt-Nickel-, Kobalt-Nickel-Eisen-, Kobalt-Eisen- sowie Phosphor-, Bor- und/oder Stickstoff-enthaltende Legierungen der genannten Art, z.B. Legierungen aus 90 bis 98 % Kobalt und 2 bis 10 % Phosphor, 30 bis 20 % Nickel und 70 bis 80 % Kobalt, 90 % Kobalt, 9 % Nickel und 1 % Phosphor, 88 % Kobalt, 9 % Nickel und 3 % Bor oder 40 bis 50 % Kobalt, 40 bis 50 % Nickel und 1 bis 5 % Bor. Mit diesen Legierungen lassen sich durch chemische Abscheidung auf polierten Substraten Filme von unter 60 nm Dicke herstellen mit z.B. einer Koerzitivfeldstärke von 20 bis 75 kA/m und einer Sättigungsmagnetisierung von 1 bis 1,5 Tesla. Ebenfalls geeignet sind durch einen Sputterprozeß erzeugte ferromagnetische Schichten, welche gegebenenfalls auf eine aufgesputterte Chromzwischenschicht niedergeschlagen werden. Gleichfalls bekannt ist eine Zulegierung von Chrom zur Magnetschicht.

Gemäß einer zweckmäßigen Ausgestaltung der erfindungsgemäßen Verfahren wird vor dem Aufbringen der amorphen Kohlenstoffschicht die Oberfläche der unbehandelten Magnetschicht durch RF/DC-Ätzen vorbereitet. Hierbei wird bei einem Sputtergasdruck zwischen $10^{-3}$ und $10^{-2}$ mbar Argon beispielsweise eine RF-Leistung von 0,1 bis 1,0 Watt/cm$^2$ während 1 bis 5 Minuten angelegt. Da das Substrat ein negatives Potential erhält, wird durch die auf die Magnetschicht auftreffenden Argonatome ein teilweiser, wenn auch geringer Abtrag in der obersten Schicht erreicht. Die abgetragene Schichtdicke beträgt dabei 1 bis 5 nm. An diese Vorbehandlung schließt sich üblicherweise unmittelbar das Aufbringen der Kohlenstoffschicht an. Aufgrund dieses Anätzens der Magnetschichtoberfläche läßt sich die Haftung und Keimbildung der Kohlenstoffschicht noch weiter verbessern.

Die nach dem erfindungsgemäßen Verfahren erhaltenen magnetischen Aufzeichnungsträger zeigen eine hervorragende mechanische Festigkeit der Oberfläche, die sich durch eine besondere Widerstandsfestigkeit bei der vielfachen Benutzung des Aufzeichnungsträgers, wie es besonders beim Start-Stop-Betrieb von Magnetspeicherplatten der Fall ist, bewährt. Ebenfalls sind die erfindungsgemäßen magnetischen Aufzeichnungsträger durch die Schutzschicht sehr stabil gegen die durch Luft bzw. Luftfeuchtigkeit verursachte Korrosion der dünnen magnetischen Metallschichten. Wesentlich ist jedoch nicht nur die Kombination beider Verbesserungen sondern vor allem die Tatsache der Verbesserung, ohne daß die magnetischen Eigenschaften der Aufzeichnungsschicht dadurch, wie meist beim Stand der Technik üblich, nachteilig beeinflußt werden.

So zeigen nach dem erfindungsgemäßen Verfahren hergestellte Aufzeichnungsträger nach einer 20stündigen Lagerung in destilliertem Wasser keinerlei sichtbare Korrosionsstellen, während Aufzeichnungsträger nach dem Stand der Technik nahezu vollständig korrodiert sind. Auch die mechanische Widerstandsfestigkeit solcher nach dem erfindungsgemäßen Verfahren hergestellten Aufzeichnungsträger ist merklich verbessert. Bei einem Langzeittest, bei dem ein Magnetkopf unter Reinraumbedingungen mit einer Auflagekraft von 15 cN über den langsam mit 1,5 RPM rotierenden Aufzeichnungsträger bewegt wird, wird der zeitliche Verlauf der Reibungskraft gemessen. Dabei wird bei einem mit einer nach dem Stand der Technik aufgesputterten Kohlenstoffschutzschicht versehenen Aufzeichnungsträger die durch Standardspezifikationen gegebene kritische Reibungskraft von 5 cN nach 1,5 Stunden Laufdauer erreicht, während mit solchen nach dem erfindungsgemäßen Verfahren erhaltenen Aufzeichnungsträgern mehr als 25 Stunden Laufzeit möglich sind.

## Patentansprüche

1. Verfahren zur Herstellung eines magnetischen Aufzeichnungsträgers, im wesentlichen bestehend aus einem unmagnetischen Trägermaterial und einer darauf aufgebrachten ferromagnetischen Metalldünnschicht, sowie einer auf der Oberfläche der Metalldünnschicht befindlichen Wasserstoff enthaltenden, amorphen Kohlenstoffschutzschicht, welche in einer Vakuumkammer mittels eines Sputterprozesses ausgehend von einem Kohlenstoff-Target unter gleichzeitiger Zugabe eines im Sputterplasma zersetzlichen Kohlenwasserstoffgases zum Sputtergas auf der Oberfläche der Metalldünnschicht in einer Dicke von 5 bis 100 nm erzeugt wird, dadurch gekennzeichnet, daß die Wasserstoff enthaltende, amorphe Kohlenstoffschicht mittels eines DC-Magnetron-Sputterprozesses mit einem Kohlenstoff-Target und unter Zugabe eines Kohlenwasserstoffgases zum Sputtergas erzeugt wird.

2. Verfahren gemäß Anspruch 1, dadurch gekennzeichnet, daß die Zugabe des Kohlenwasserstoffgases in einer solchen Konzentration erfolgt, daß sich die Sputterleistung während der Prozeßdauer nicht ändert.

3. Verfahren gemäß Anspruch 2, dadurch gekennzeichnet, daß das Kohlenwasserstoffgas Acetylen ist und in einem Partialdruckverhältnis von 0,01 : 1 bis 1 : 1 dem Sputtergas zugesetzt wird.

4. Verfahren gemäß Anspruch 1, dadurch gekennzeichnet, daß die Oberfläche der unbehandelten Magnetschicht vor dem Aufbringen der Wasserstoff enthaltenden, amorphen Kohlenstoffschutzschicht durch RF/DC-Ätzen vorbehandelt wird.

## Claims

1. A process for the production of a magnetic recording medium essentially consisting of a nonmagnetic base, a thin ferromagnetic metal layer applied to the said base and a hydrogen-containing, amorphous protective carbon layer on the surface of the thin metal layer, which carbon layer is produced on the surface of the thin metal layer in a thickness of from 5 to 100 nm in a vacuum chamber by means of a sputter process, starting from a carbon target, while simultaneously adding to the sputter gas a hydrocarbon gas which is decomposible in the sputter plasma, wherein the hydrogen-containing, amorphous carbon layer is produced by means of a DC magnetron sputter process using a carbon target and with the addition to the sputter gas of a hydrocarbon gas.

2. A process as claimed in claim 1, wherein the hydrocarbon gas is added in a concentration such that the sputter efficiency does not change during the process.

3. A process as claimed in claim 2, wherein the hydrocarbon gas is acetylene and is added to the sputter gas in a ratio of partial pressure of from 0.011 to 1 : 1.

4. A process as claimed in claim 1, wherein the surface of the untreated magnetic layer is pretreated by RF/DC etching prior to application of the hydrogen-containing, amorphous protective carbon layer.

## Revendications

1. Procédé de fabrication d'un support magnétique d'enregistrement constitué essentiellement d'un substrat non magnétique, d'une couche mince métallique ferromagnétique appliquée sur celui-ci et d'une couche protectrice de carbone amorphe, contenant de l'hydrogène, située sur la surface de la couche mince métallique et produite sur celle-ci en une épaisseur de 5 à 100 nm dans une chambre à vide au moyen d'un processus de pulvérisation à partir d'une cible en carbone avec addition simultanée au gaz de pulvérisation d'un hydrocarbure gazeux décomposable dans le plasma de pulvérisation, caractérisé par le fait que la couche de carbone amorphe et contenant de l'hydrogène est produite au moyen d'un processus de pulvérisation par magnétron à courant continu avec une cible en carbone et avec addition d'un hydrocarbure gazeux au gaz de pulvérisation.

2. Procédé selon la revendication 1, caractérisé par le fait que l'addition de l'hydrocarbure gazeux est faite en une concentration telle que le débit de pulvérisation ne change pas pendant la durée du processus.

3. Procédé selon la revendication 2, caractérisé par le fait que l'hydrocarbure gazeux est l'acétylène et est ajouté au gaz de pulvérisation dans un rapport des pressions partielles de 0,01 à 1.

4. Procédé selon la revendication 1, caractérisé par le fait qu'avant l'application de la couche protectrice de carbone amorphe et contenant de l'hydrogène, la surface de la couche magnétique non traitée est prétraitée par attaque RF/courant continu.